# EUROPEAN PATENT SPECIFICATION

(11) **EP 1 288 067 B1**
(45) Date of publication and mention of the grant of the patent: **24.10.2007**
(21) Application number: 02255781.3
(22) Date of filing: 20.08.2002
(51) Int. Cl.: B60P 1/64, B60P 7/13

(54) **Vehicle having a load handling system**
Kraftfahrzeug mit einem Lasthandhabungssystem
Véhicule équipé d'un système de manipulation de charges

(30) Priority: 24.08.2001 GB 0120676
(43) Date of publication of application: 05.03.2003
(73) Proprietor: Hiab Limited, Cargotec Industrial Park Ellesmere Shropshire SY12 9JW (GB)
(72) Inventor: Harrison, Gary Desmond, Shrewsbury, Shropshire SY1 3AG (GB); Locker, Stephen William, Shrewsbury, Shropshire SY1 3AG (GB)
(74) Representative: Price, Paul Anthony King

(56) References cited:
- EP-A- 0 337 011
- BE-A3- 1 002 515
- BE-A6- 1 006 469
- DE-U1- 9 306 626
- US-A- 4 227 843

## Description

### BACKGROUND OF THE INVENTION

The invention relates to a vehicle having a load handling system for loading different types of payload module.

A vehicle with a load handling system of one of the many different hook-lift types is primarily designed for loading and unloading, over the rear of the vehicle, a payload module of the type having a pair of strong central longitudinal rails extending along the underside of the payload module and designed to run over rollers at the rear end of the vehicle chassis during the loading and unloading operations. Such a payload module may be a flatrack, which is generally speaking a flat platform with an A-shaped frame at the front end with a bar which is engaged by the hook of the load handling system.

In recent years, there has been a wish to give the vehicle a secondary capability such that it can also load and unload payload modules of a different type, in particular ISO freight containers. During loading, it is necessary to slidably support the underside of the container as the container is lifted up and over the rear end of the vehicle. Specifically, the container must be slidably supported along the side rails at the outer lower side regions of the container.

The support required by the container is at a wider spacing apart than the support required by the flatrack. Thus two different types of support means have had to be provided at the rear of the vehicle. Reference is made to EP-A-0,925,999 and EP-A-1,053,909 (both in the name of Partek Cargotec Limited). These EP-A documents show that the two support means for the container are essentially left in position during the loading and unloading of a flatrack, even though the two support means for the container are to some extent either moved slightly out of the way and/or partially folded up. The continued presence of the two support means at lateral positions corresponding essentially to the full width of the container imposes constraints on the loading operation and final positioning of the flatrack in order to avoid clashing with the two support means for the container. The need for clearance between the flatrack and the two support means for the container is a particular problem if there is a slight angular misalignment between the longitudinal axis of the vehicle and the longitudinal axis of the flatrack when the flatrack is sitting on the ground at the start of the loading operation. Under these circumstances, one front corner of the flatrack can approach very close to one of the support means for the container, until the loading operation has progressed far enough for the rails underneath the flatrack to engage the support means (rollers) provided on the vehicle for the flatrack, such that the flatrack is gradually brought into alignment with the vehicle.

EP-A-0,925,999 and EP-A-1,053,909 each disclose the features of the precharacterizing portion of claim 1.

EP-A-0,337,011 discloses a vehicle without a load handling system. The vehicle is used with a container of the type that stands on legs on the ground and under which the vehicle is reversed. Twistlocks are used to lock down the loaded container. A carrier is rotatable through 90° in order to bring into use a respective one of two different twistlocks which have different operational heights, which match the heights of different types of container standing on legs of different lengths.

A similar type of vehicle is disclosed in US-A-4,227,843. The main difference is that the rotatable hub which carries the two different types of twistlock rotates through 180° rather than through 90°.

### SUMMARY OF THE INVENTION

The present invention aims to address some of the above problems.

According to the present invention, there is provided a vehicle comprising:
a load handling system for loading first and second types of payload module onto the vehicle over the rear of the vehicle, wherein first support means is provided at each side of the rear of the vehicle for supporting the underside of the first type of payload module during loading; and
first and second support devices pivotably mounted at respective sides of the rear of the vehicle and each having second support means for supporting the underside of the second type of payload module during loading;
characterized in that:
each first support means in provided on a respective one of the first and second support devices; and
the support devices are pivotable between a first configuration in which the first support means face downwards and the second support means face upwards and a second configuration in which the first support means face upwards and the second support means face downwards.

In our preferred embodiment, the first type of payload module is a flatrack, and the second type of payload module is an ISO container.

By pivoting the support devices from the first configuration to the second configuration, the second support means used for the loading of the container are positioned so as to face downwards and are thus less likely to clash with the flatrack when it is being loaded and supported by the first support means which face upwards in the second configuration.

Preferably, in the first configuration the support devices extend outwards away from one another and in the second configuration the support devices extend inwards towards one another.

By swinging the support devices so that they extend inwards, it is possible to move the second support means inwards away from the lateral outward positions that the second support means occupy when facing upwards when a container is being loaded. By moving the second support means inwards when it is desired to load a flatrack, the second support means are moved to inward positions at which they are less likely to clash with the flatrack.

Consequently, the structures used for loading the container are moved inwards out of the way during flatrack loading, and this removes the constraints imposed on the loading operation and final position of the flatrack during the flatrack operation mode. There is less concern about angular misalignment between the longitudinal axis of the vehicle and the longitudinal axis of the flatrack at the start of the loading operation. Also, it is possible to arrange for the final position of the flatrack to be sufficiently far forwards on the vehicle to achieve optimised flatrack positioning and compliance with axle loading and road regulations.

Generally speaking, a flatrack must be positioned further forwards on the vehicle than a container. This is because there is often a load handling crane behind the cab of the vehicle, and the crane needs to be able to lift items on and off the flatrack mounted on the vehicle.

Preferably, the support devices move in generally vertical planes as they pivot between the first and second configurations. Thus the weight of the loaded container will tend to keep the support devices in the first configuration, and the weight of the payload module will tend to keep the support devices in the second configuration, thereby helping to prevent unwanted movement between the two configurations.

In the preferred embodiment for use with a flatrack and a container, each support device has a main pivot by which it is pivotably mounted for movement between the first and second configurations, and has its first support means closer to the main pivot than the second support means. Thus the spacing between the two first support means is matched to the spacing required for supporting the underside of the flatrack, and the spacing between the two second support means is matched to the spacing required for supporting the underside of the container. Specifically, the separation between the support means required by the container is greater than the separation between the support means required by the flatrack.

Preferably, in the first configuration the payload module support surfaces of the second support means are above the inverted bases of the first support means, and in the second configuration the payload module support surfaces of the first support means are above the inverted bases of the second support means. This helps to ensure that the first support means will be out of the way when the second support means are being used, and conversely that the second support means will be out of the way, by being kept at a lowered position, when the first support means are being used.

In our preferred embodiment, each support device includes a projection which, in the second configuration, projects above the first support means at the outward side thereof and slopes down towards the first support means for guiding the first type of payload module into loading alignment with the first support means. The projections are particularly useful for providing guidance when the first type of payload module is a flatrack, as this guidance can help to correct any angular misalignment between the flatrack and the vehicle. The projections will not cause a problem when loading the second type of payload module (container) because the movement from the second configuration to the first configuration will ensure that the projections are now projecting downwards, and thus will not clash with the container as it is loaded.

Preferably, the projection, in the first configuration, projects downwards and abuts against an abutment to prevent pivotal movement of the support device beyond the first configuration. In this way, the projection also serves some useful purpose in the first configuration, in addition to providing the guidance function in the second configuration.

In a preferred embodiment, in the second configuration the bases of the first support means are seated on abutments to prevent pivotal movement of the support devices beyond the second configuration. This also helps to provide a good force transmission path, to transfer the weight of the flatrack from the first support means, down through the support devices and to the vehicle chassis.

Preferably, each support device comprises a main arm which includes the first support means, and the second support means is connected to the main arm through a secondary pivot. The secondary pivots mean that it is possible to accommodate the change in attitude of the container during the loading operation as the container gradually becomes horizontal.

Preferably, each second support means comprises a longitudinal bed for slidably supporting a respective outer lower side region of the second type of payload module and a seat positioned in the longitudinal bed between front and rear sections thereof and including a releasable lock for locking down the rear end of said respective outer lower side region.

Preferably, each second support means comprises front and rear arms which are pivotably connected together by a pivot connection, and the front arm provides the front section of the longitudinal bed and the rear arm provides the rear section of the longitudinal bed.

Preferably, the front arm also provides the seat and carries the releasable lock, and the rear arm is pivotable upwards about the pivot connection in the first configuration to form a barrier against rearward movement of a loaded second type of payload module.

### BRIEF DESCRIPTION OF THE DRAWINGS

A preferred non-limiting embodiment of the present invention will now be described with reference to the accompanying drawings, some of which are diagrammatic or schematic.
Fig. 1 is a side view of a vehicle in accordance with the present invention, showing the operation of the load handling system.
Fig. 2, Fig. 3 and Fig. 4 are a plan view (partially in section), a side view and a rear view respectively of a right-hand support device.
Fig. 5, Fig. 6 and Fig. 7 are a plan view (partially in section), a side view and a rear view respectively of a left-hand support device.
Fig. 8 is a rear view of the two support devices when in a first configuration.
Figs. 9-11 are a sequence of side views showing the loading operation for an ISO container.
Fig. 12 is a rear view showing the two support devices in a second configuration.
Figs. 13-15 are a sequence of views showing a loading operation of a flatrack.

### DESCRIPTION OF THE PREFERRED EMBODIMENT

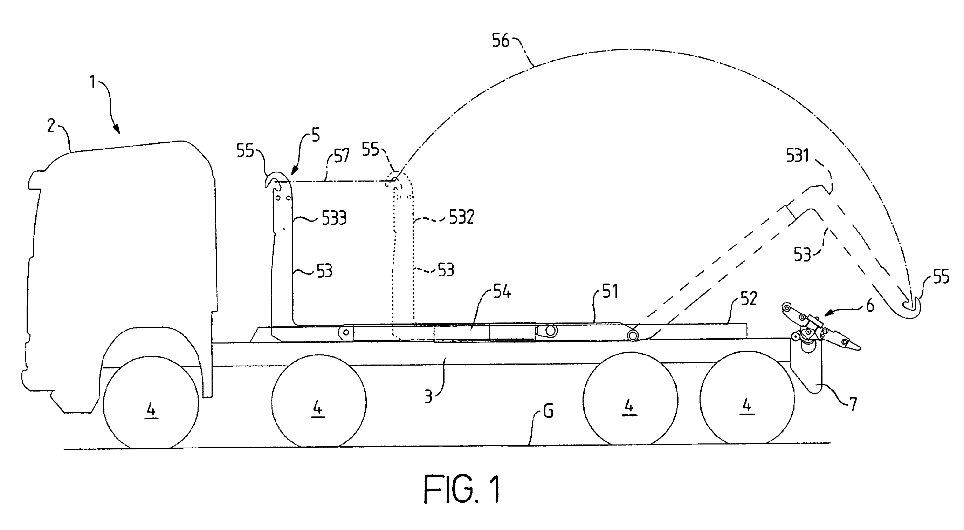

Referring to Fig. 1, a vehicle 1 comprises a forward cab 2 mounted on a chassis 3 which is supported on wheels 4. The vehicle also includes a load handling system 5 of the hook-lift type which comprises a main arm 51 pivotably connected to a base frame 52 secured to the chassis 3. A hook arm 53 is telescopically received in the main arm 51 and the loading movement of the load handling system is such as to move the hook arm 53 from a starting position 531, through an intermediate position 532 to a final position 533. The main arm 51 is pivoted by a cylinder and piston arrangement 54 which, for the sake of clarity, is only shown in the final, loaded position of the load handling system. A further cylinder and piston arrangement (not shown) is used to telescopically expand and retract the hook arm 53 in and out of the end of the main arm 51.

At the end of the hook arm 53 is a hook 55 which is able to engage with a bar on a payload module for lifting that payload module onto the vehicle. The movement path of the hook 55 comprises an initial arcuate path 56 followed by a linear path 57.

There are two support devices 6 fixed to the rear of the chassis 3. The chassis actually comprises two longitudinal chassis beams laterally spaced apart. A left-hand support device 6 is fixed to the left chassis beam, and a right-hand support device 6 is fixed to a right chassis beam. The two support devices 6 are essentially mirror images of one another.

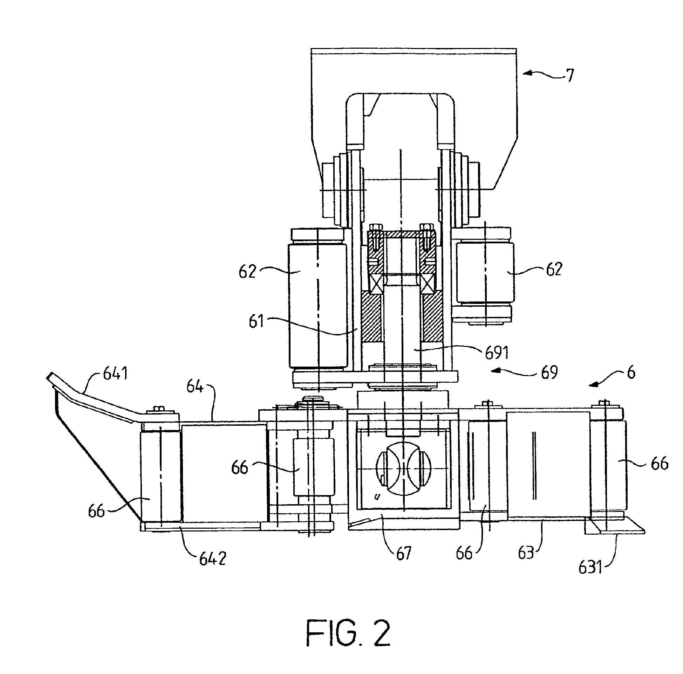

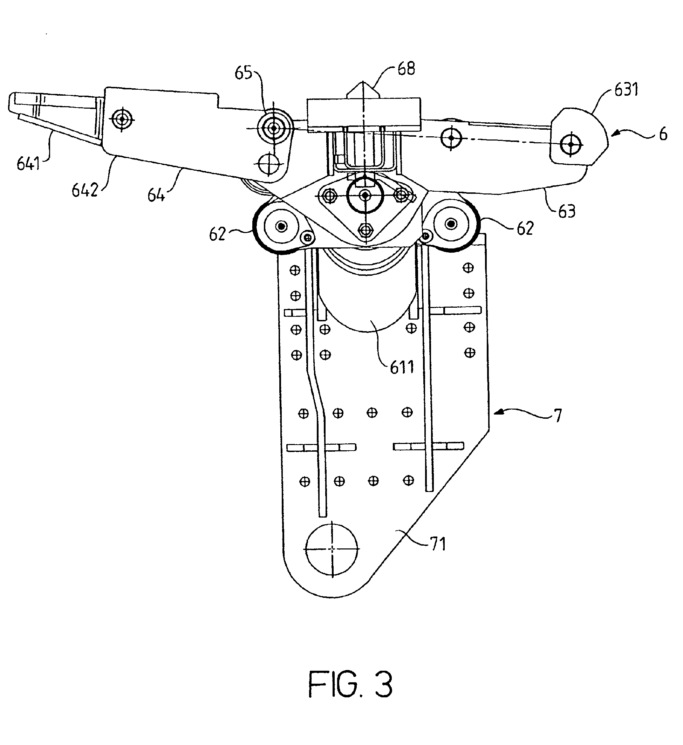

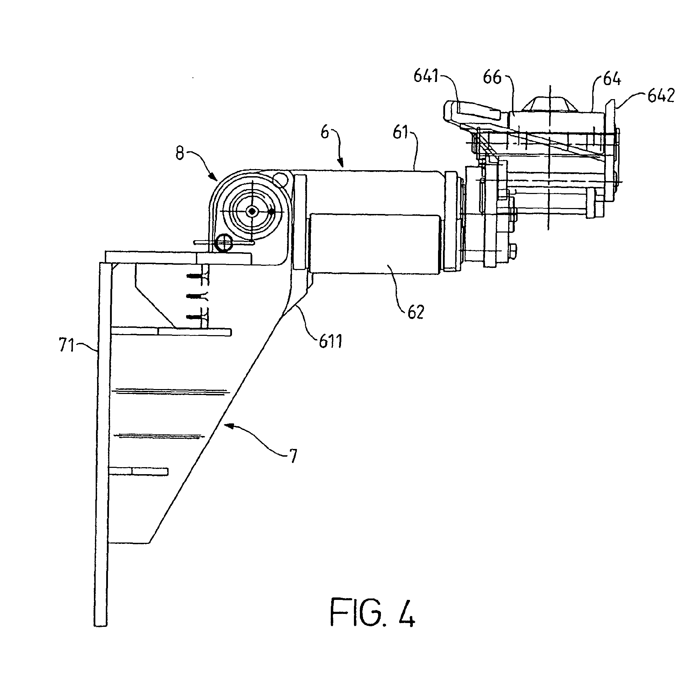

The right-hand support device 6 is shown in Figs. 2-4 together with the base structure 7 on which it is pivotably mounted through a main pivot 8. The base structure 7 includes a plate 71 which may be bolted or otherwise rigidly fastened to the respective chassis beam.

The support device 6 comprises a main arm 61 extending away from the main pivot 8. A pair of rollers 62 are mounted on the main arm 61 in order to support, during loading and unloading, the underside rails of a flatrack.

In order to slidably support an outer lower side region of an ISO container, the support device 6 includes container support means in the form of a front arm 63 to the rear of which is connected a rear arm 64 through a pivot connection 65. The front and rear arms 63, 64 include a series of rollers 66 aligned in the longitudinal direction of the vehicle for functioning as a roller bed to support the relevant outer lower side region of the ISO container during loading and unloading. Towards the rear of the front arm 63 is a seat 67 on which is seated a rear corner fitting of the container at the completion of loading. In this way, the weight of the loaded container bears down on the seat 67 rather than the rollers 66. The seat 67 contains a twistlock 68 which may be lifted up into and engaged with the container corner fitting in order to lock down the container. The twistlock 68 is shown raised for reasons of clarity in the views. However, during loading and unloading, it is dropped down out of the way to avoid clashing with the container.

The rear end of the rear arm 64 has a rearwardly and inwardly projecting extension 641 which is shaped so as to help guide the container onto the rollers 66 during loading. The rear arm 64 also has a guidance flange 642, and the front arm 63 has a guidance flange 631. The flanges 631, 642 help to laterally restrain the container during loading.

A secondary pivot 69 at the end of the main arm 61 connects the front arm 63 to the main arm 61. The secondary pivot 69 includes a pivot shaft 691 projecting from the front arm 63 and received inside the main arm 61 in a bearing arrangement, as shown in the partial cross-section portion of Fig. 2.

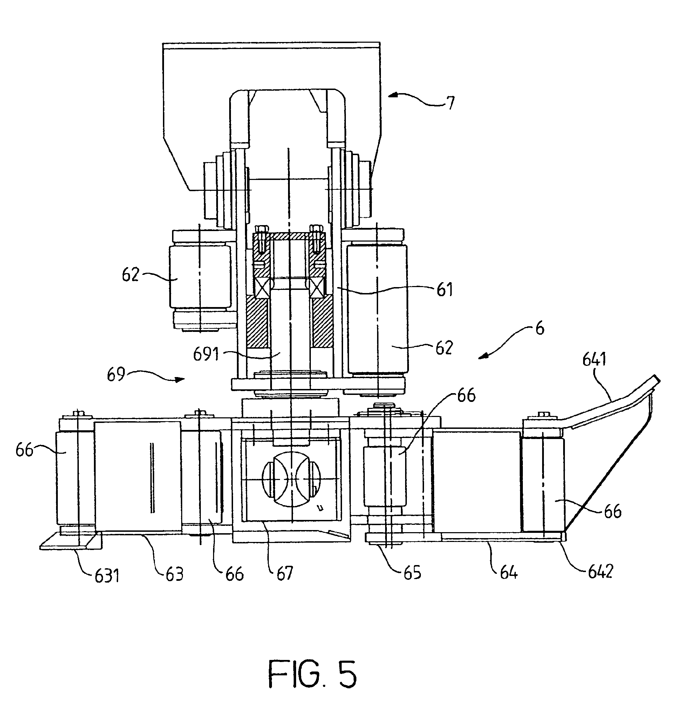

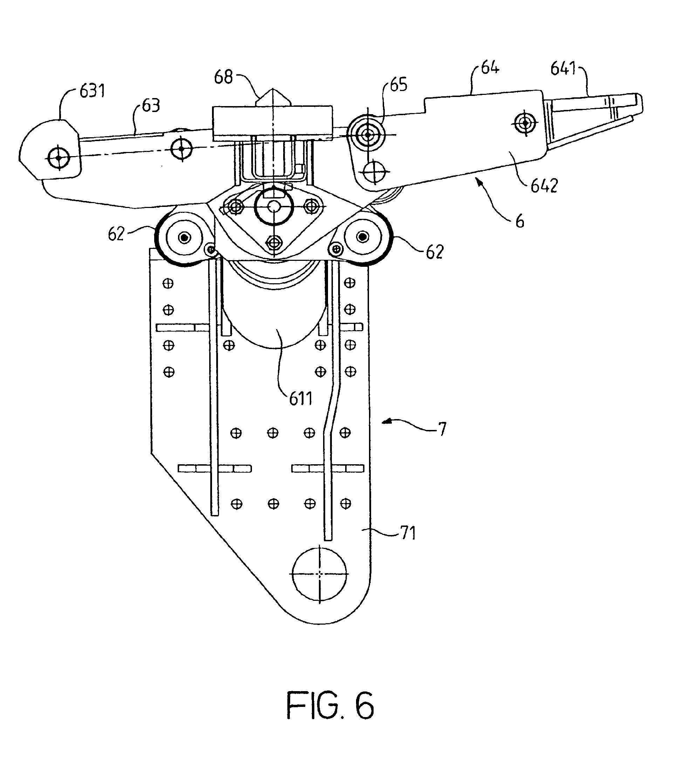

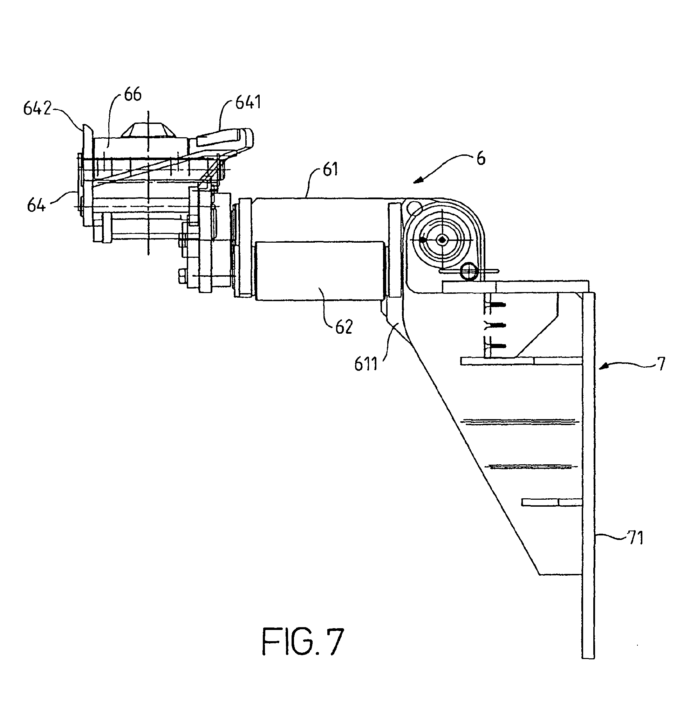

The left-hand support device 6 and its associated base structure 7 is shown in Figs. 5-7 and is a mirror image of the arrangement of Figs. 2-4, and will therefore not be described separately.

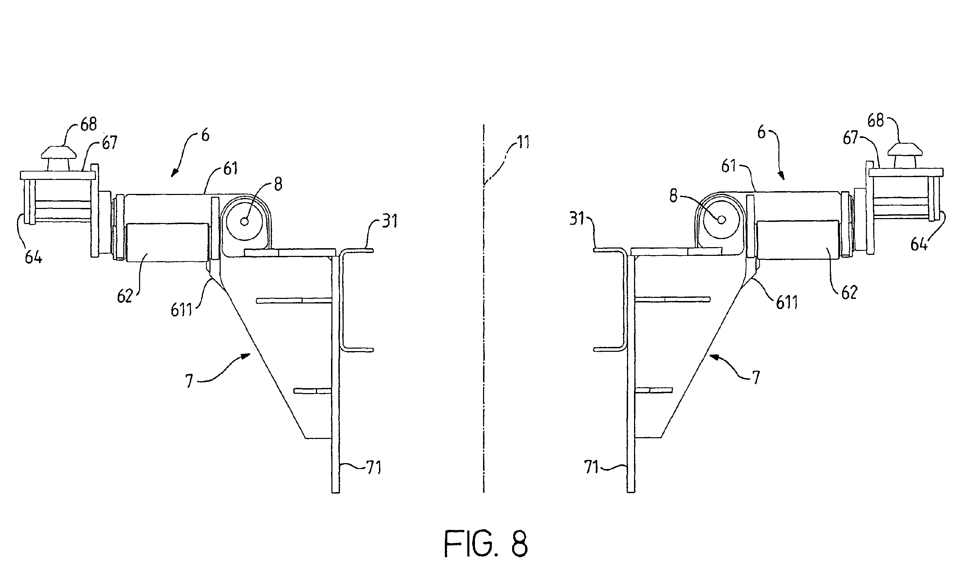

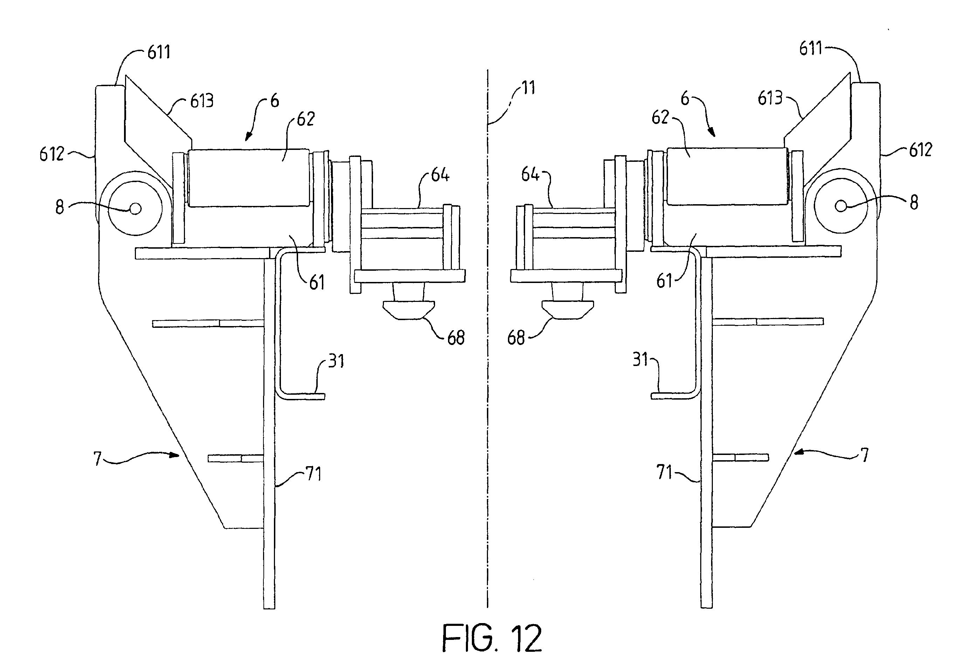

First and second configurations of the support devices 6 are shown in Figs. 8 and 12 respectively.

In the first configuration of Fig. 8, the support devices 6 extend outwards and project away from one another. The rollers 62 for supporting the flatrack face downwards and are not available for use. The rollers 66 on the front and rear arms 63, 64 face upwards and are available for use in supporting a container during loading. The rollers 62 are at a lower level than the rollers 66 and are thus conveniently stored out of the way. The top surface of the main arm 61 of each support device is below the level of the support surface provided by the rollers 66 and will thus not clash with the bottom of the container.

The main arm 61 includes a projection 611 which projects downwards from beneath the main pivot 8 and has a face 612 (see Fig. 12) which abuts against an abutment face (not visible) of the base structure 7 to prevent the support device 6 from pivoting down below the horizontal level shown in Fig. 8.

It may be seen that the support devices 6 are symmetrically placed about the median plane 11 of the vehicle. The two chassis beams 31 to which the base structures 7 are attached are also shown.

A power-operated device such as a hydraulic cylinder and piston device (not shown) may be used to move from the first configuration of the support devices 6 shown in Fig. 8, to the second configuration shown in Fig. 12. For example, controls may be provided in the cab 2 in order to select between the two configurations representing the flatrack mode and the container mode.

The pivoting movement of the support devices 6 is in a common generally-vertically plane in view of the fact that the axes of the main pivots 8 are aligned longitudinally of the vehicle 1.

The support devices 6 sweep out generally semi-circular arcs as they are pivoted in order to flip over from the outwardly pointing configuration shown in Fig. 8 to the inwardly-pointing configuration shown in Fig. 12.

Movement at the two extremes of the pivoting range is limited by the support devices 6 making contact with end-stop abutments. For the first configuration shown in Fig. 8, the end abutment arrangement involves, as already explained, the projection 611 abutting against an abutment portion of the base structure 7.

For the second configuration shown in Fig. 12, the end abutment arrangement involves the bottom face of the main arm 61 abutting against the top face of the base structure 7 and also against the top face of the chassis beam 31.

In the second configuration, a flatrack may be loaded. The weight of the flatrack will bear down on the rollers 62 and, as may be seen from Fig. 12, the weight of the flatrack will be transferred directly to the chassis beams 31.

In the second configuration shown in Fig. 12, the support means for supporting the loading of a container are stored inwardly and downwardly out of the way, so as not to impede the loading of a flatrack. The rollers 66 for supporting a container are left facing downwards, whilst the rollers 62 for supporting a flatrack are left facing upwards.

The top of the front and rear arms 63, 64 is positioned below the working surface level represented by the top of the rollers 66. This ensures that the front and rear arms 63, 64 are positioned sufficiently low down as to be out of the way of the flatrack. This is in addition to the front and rear arms 63, 64 being stored inwards of the rollers 62 in order to be out of the way in the flatrack mode.

It may be further seen from Fig. 12 that the projection 611 is now projecting upwards from the main pivot 8. It has a portion 613 on its inward side positioned just outwards of the respective roller 62. The portion 613 is shaped in the form of a slope, in order to guide the underside rail of a flatrack into alignment with the rollers 62 during the loading operation.

The main arms 61 which carry the rollers 66 for supporting the container also carry the rollers 62 for supporting the flatrack, and thus the main arms 61 serve a dual purpose. When the rollers 66 are stowed inwardly and downwardly as in the second configuration of Fig. 12, the main arms 61 that would otherwise be redundant under these circumstances actually present the rollers 62 facing upwards for use by the flatrack.

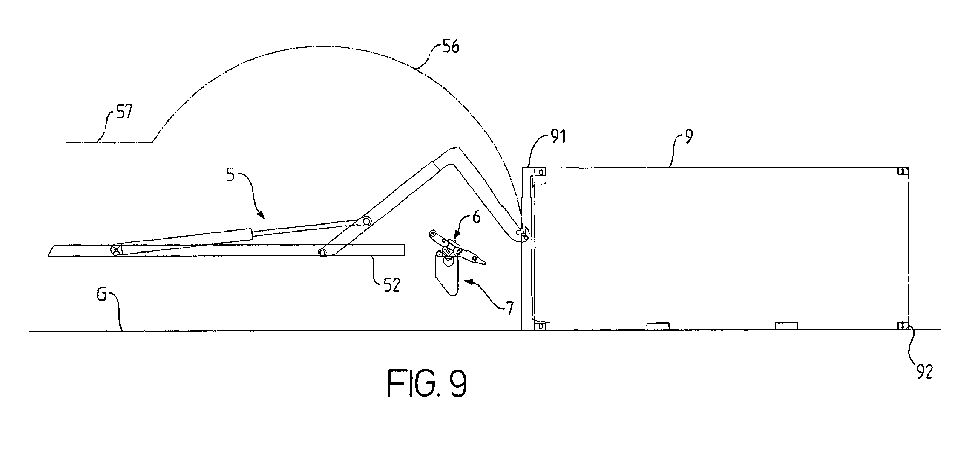

In relation to when the support devices 6 are in the first configuration for the container mode, Figs. 9-11 diagrammatically illustrate the sequence of operations for loading a 20-foot (6 metre) ISO container 9 onto the vehicle. The cab 2, chassis 3 and wheels 4 are omitted for the sake of clarity. The initial loading position is shown in Fig. 9, when the container 9 is sitting on the ground G. A frame 91 is fitted to the front end of the container 9 and has a bar which is engaged by the hook 55 of the load handling system 5.

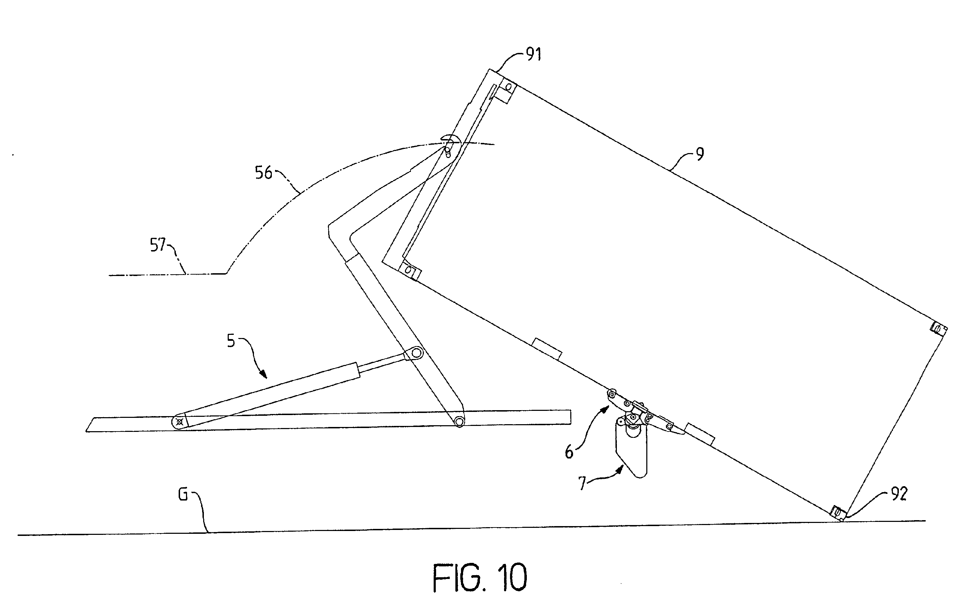

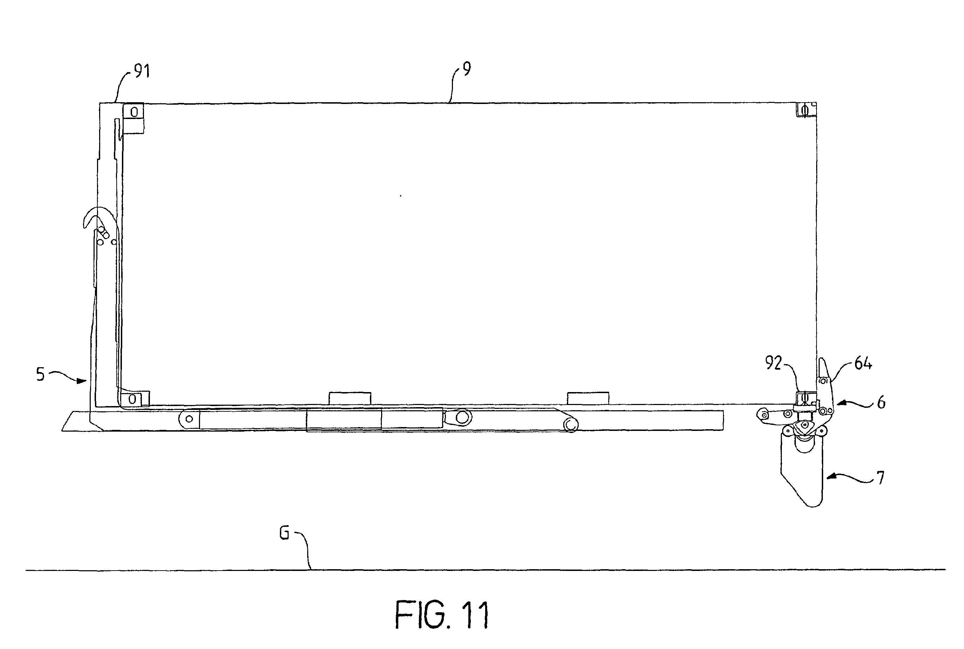

The intermediate loading position is shown in Fig. 10. The final loading position is shown in Fig. 11. The final part of the loading movement pulls the lower corner fittings 92 at the rear of the container forwards onto the seats 67, where they may then be locked down by the twistlocks 68. The rear arms 64 may be folded upwards about their pivot connections 65 in order to press against the rear of the container and to provide a barrier preventing rearward movement of the container. It may be seen that in the fully-loaded position the lower corner fittings 92 are positioned directly above the secondary pivots 69 so that the load is transmitted straight down through the pivots.

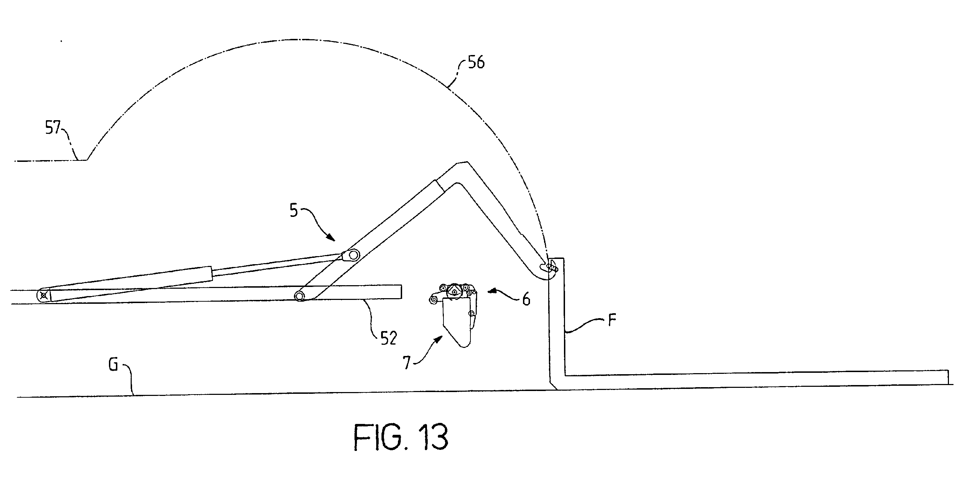

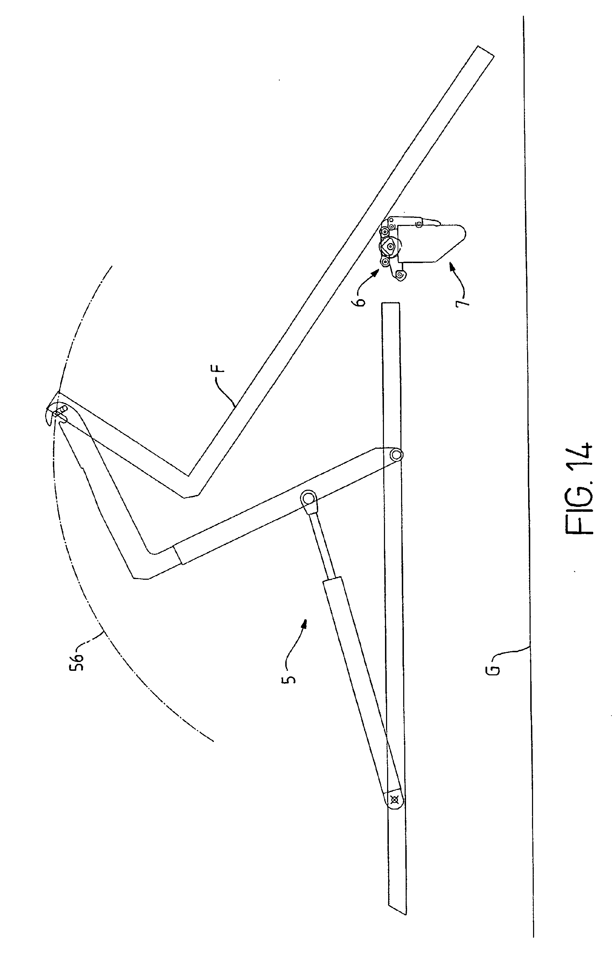

In relation to when the support devices 6 are in the second configuration for the flatrack mode, Figs. 13-15 diagrammatically show the sequence of loading steps for a flatrack F. This flatrack may be of any flatrack type such as to the NATO standard or the DIN standard. Special designs of flatrack may also be used as long as they are compatible with the load handling system and the support devices.

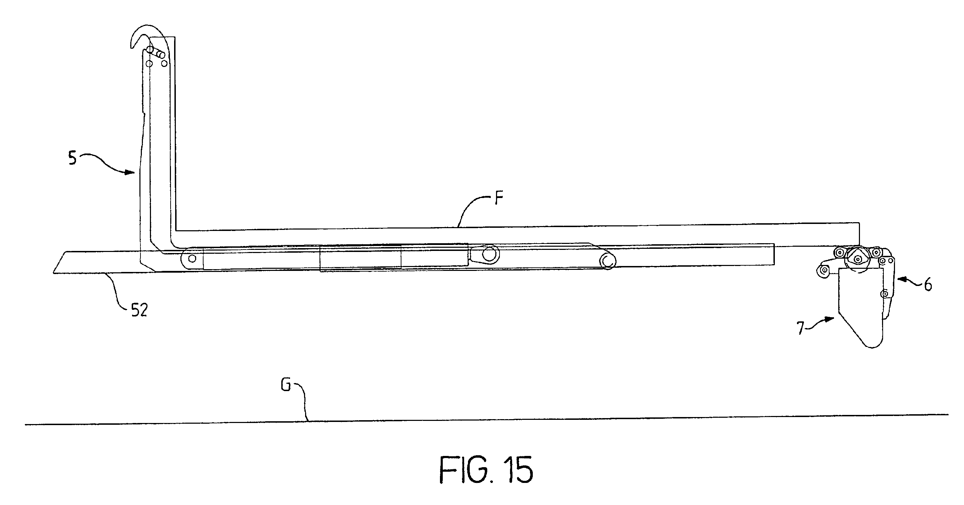

From the starting position shown in Fig. 13, the flatrack F is lifted up off the ground G and is guided onto and along the rollers 62 until it is fully loaded as shown in Fig. 15. The tail end of the flatrack is left sitting on the forward ones of the rollers 62, and the overall arrangement of the load handling system and support devices on the chassis may be such that the flatrack F is positioned suitably far forwards when fully loaded.

Whilst rollers 62 are used in our preferred embodiment for supporting the flatrack during loading and unloading, alternatives are possible such as using skid plates over which the underside rails of the flatrack would slide.

It may be seen by comparing Figs. 11 and 15 that the tail end of the flatrack F ends up, when fully loaded, further forwards than the rear end of the container 9. This is desirable because the flatrack F should be positioned sufficiently far forwards to enable a load handling crane (not shown) behind the cab 2 to place items on the flatrack and lift items off the flatrack. Because the flatrack F can be positioned as desired at a suitable final transit position which is sufficiently far forwards, it is possible to achieve optimised loading of the flatrack and its payload on the vehicle so as to comply with axle loading and road regulations.

Because, in the flatrack mode, the support means for the container is stowed inwards and downwards relative to the support means for the flatrack, the container support means does not impede or constrain the flatrack mode of operation. Even if the flatrack is misaligned relative to the vehicle at the start of loading, there is no danger that a front corner of the flatrack will inadvertently hit any of the container support structure, which is safely stowed inwardly of the flatrack support structure. Specifically, as may be seen from Fig. 12, the container support structure is stowed between the chassis beams 31.

## Claims

1. A vehicle (1) comprising:
a load handling system (5) for loading first and second types of payload module (F, 9) onto the vehicle (1) over the rear of the vehicle (1), wherein first support means (62) is provided at each side of the rear of the vehicle (1) for supporting the underside of the first type of payload module (F) during loading; and
first and second support devices (6) pivotably mounted at respective sides of the rear of the vehicle (1) and each having second support means (63, 64, 66) for supporting the underside of the second type of payload module (9) during loading;
**characterized in that**:
each first support means (62) is provided on a respective one of the first and second support devices (6); and
the support devices (6) are pivotable between a first configuration in which the first support means (62) face downwards and the second support means (63, 64, 66) face upwards and a second configuration in which the first support means (62) face upwards and the second support means (63, 64, 66) face downwards.

2. A vehicle according to Claim 1, wherein in the first configuration the support devices (6) extend outwards away from one another and in the second configuration the support devices (6) extend inwards towards one another.

3. A vehicle according to Claim 1 or 2, wherein the support devices (6) move in generally vertical planes as they pivot between the first and second configurations.

4. A vehicle according to any preceding claim, wherein each support device (6) has a main pivot (8) by which it is pivotably mounted for movement between the first and second configurations, and has its first support means (62) closer to the main pivot (8) than the second support means (63, 64, 66).

5. A vehicle according to any preceding claim, wherein in the first configuration the payload module support surfaces of the second support means (63, 64, 66) are above the inverted bases of the first support means (62), and in the second configuration the payload module support surfaces of the first support means (62) are above the inverted bases of the second support means (63, 64, 66).

6. A vehicle according to any preceding claim, wherein each support device (6) includes a projection (611) which, in the second configuration, projects above the first support means (62) at the outward side thereof and slopes down towards the first support means for guiding the first type of payload module (F) into loading alignment with the first support means.

7. A vehicle according to Claim 6, wherein the projection (611), in the first configuration, projects downwards and abuts against an abutment (7) to prevent pivotal movement of the support device (6) beyond the first configuration.

8. A vehicle according to any preceding claim, wherein in the second configuration the bases (61) of the first support means (62) are seated on abutments (7, 31) to prevent pivotal movement of the support devices (6) beyond the second configuration.

9. A vehicle according to any preceding claim, wherein each support device (6) comprises a main arm (61) which includes the first support means (62), and the second support means (63, 64, 66) is connected to the main arm (61) through a secondary pivot (69).

10. A vehicle according to Claim 9, wherein each second support means (63, 64, 66) comprises a longitudinal bed for slidably supporting a respective outer lower side region of the second type of payload module (9) and a seat (67) positioned in the longitudinal bed between front and rear sections thereof and including a releasable lock (68) for locking down the rear end of said respective outer lower side region.

11. A vehicle according to Claim 10, wherein each second support means (63, 64, 66) comprises front and rear arms (63, 64) which are pivotably connected together by a pivot connection (65), and the front arm (63) provides the front section of the longitudinal bed and the rear arm (64) provides the rear section of the longitudinal bed.

12. A vehicle according to Claim 11, wherein the front arm (63) also provides the seat (67) and carries the releasable lock (68), and the rear arm (64) is pivotable upwards about the pivot connection (65) in the first configuration to form a barrier against rearward movement of a loaded second type of payload module (9).

13. A vehicle according to any one of Claims 10 to 12, wherein the longitudinal bed is a longitudinal roller bed (66).

14. A vehicle according to any preceding claim, wherein each first support means comprises one or more rollers (62) for supporting a respective rail extending along the underside of the first type of payload module (F).

15. A vehicle according to any preceding claim, wherein the load handling system (5) is of the hook-lift type.

16. A vehicle according to any preceding claim, wherein the first type of payload module is a flatrack (F).

17. A vehicle according to any preceding claim, wherein the second type of payload module is an ISO container (9).

## Patentansprüche

1. Fahrzeug (1) mit:
einem Lasthandhabungssystem (5) zum Beladen erster und zweiter Arten von Nutzlastmodulen (F, 9) auf das Fahrzeug (1) über die Rückseite des Fahrzeuges (1), wobei ein erstes Stützmittel (62) auf jeder Seite des hinteren Teils des Fahrzeuges (1) vorgesehen ist, um die Unterseite der ersten Art von Nutzlastmodul (F) während des Beladens abzustützen; und
ersten und zweiten Stützvorrichtungen (6), die schwenkbar an entsprechenden Seiten des rückwärtigen Teils des Fahrzeuges (1) angeordnet sind und jedes zweite Stützmittel (63, 64, 66) hat, um die Unterseite der zweiten Art von Nutzlastmodul (9) während des Beladens abzustützen;
**dadurch gekennzeichnet, daß**:
jedes erste Stützmittel (62) auf einer ersten oder zweiten Stützvorrichtung (6) vorgesehen ist; und
die Stützvorrichtungen (6) zwischen einer ersten Anordnung, bei welcher das erste Stützmittel (62) nach unten gerichtet ist und das zweite Stützmittel (63, 64, 66) nach oben gerichtet ist, und einer zweiten Anordnung schwenkbar sind, bei welcher das erste Stützmittel (62) nach oben gerichtet ist und das zweite Stützmittel (63, 64, 66) nach utnen gerichtet ist.

2. Fahrzeug nach Anspruch 1, wobei bei der ersten Anordnung die Stützvorrichtungen (6) sich nach außen voneinander fort erstrecken und bei der zweiten Anordnung die Stützvorrichtungen (6) sich einwärts aufeinander zu erstrecken.

3. Fahrzeug nach Anspruch 1 oder 2, wobei die Stützvorrichtungen sich in im allgemeinen vertikalen Ebenen bewegen, wenn sie zwischen der ersten und der zweiten Anordnung schwenken.

4. Fahrzeug nach einem vorhergehenden Anspruch, wobei jede Stützvorrichtung (6) ein Hauptgelenk (8) hat, durch welches sie für die Bewegung zwischen der ersten und zweiten Anordnung schwenkbar montiert ist, wobei ihr erstes Stützmittel (62) dichter an dem Hauptgelenk (8) als das zweite Stützmittel (63, 64, 66) liegt.

5. Fahrzeug nach einem vorhergehenden Anspruch, wobei bei der ersten Anordnung Stützoberflächen des Nutzlastmoduls des zweiten Stützmittels (63, 64, 66) über den umgekehrten Basen des ersten Stützmittels (62) sind und sich bei der zweiten Anordnung die Stützoberflächen des Nutzlastmoduls des ersten Stützmittels (62) über den umgekehrten Basen des zweiten Stützmittels (63, 64, 66) befinden.

6. Fahrzeug nach einem vorhergehenden Anspruch, wobei jede Stützvorrichtung (6) einen Überstand (611) aufweist, der bei der zweiten Anordnung über das erste Stützmittel (62) an seiner Außenseite übersteht und zu dem ersten Stützmittel hin nach unten abfällt, um die erste Art von Nutzlastmodul (F) in Ladeausrichtung mit dem ersten Stützmittel zu führen.

7. Fahrzeug nach Anspruch 6, wobei der Überstand (611) bei der ersten Anordnung nach unten übersteht und gegen einen Strebepfeiler (7) in Widerlage kommt, um eine Schwenkbewegung der Stützvorrichtung (6) über die erste Anordnung hinaus zu verhindern.

8. Fahrzeug nach einem vorhergehenden Anspruch, wobei bei der zweiten Anordnung die Basen (61) des ersten Stützmittels (62) auf Strebepfeiler (7, 31) gesetzt sind, um eine Schwenkbewegung der Stützvorrichtungen (6) über die zweite Anordnung hinaus zu verhindern.

9. Fahrzeug nach einem vorhergehenden Anspruch, wobei jede Stützvorrichtung (6) einen Hauptarm (61) aufweist, welcher das erste Stützmittel (62) aufweist, und das zweite Stützmittel (63, 64, 66) über ein Nebengelenk (69) mit dem Hauptarm (61) verbunden ist.

10. Fahrzeug nach Anspruch 9, wobei jedes zweite Stützmittel (63, 64, 66) ein Längsbett aufweist für eine Gleitabstützung eines entsprechenden äußeren, unteren Seitenbereichs der zweiten Art von Nutzlastmodul (9), sowie einen Sitz (67), der in dem Längsbett zwischen seinen vorderen und rückwärtigen Abschnitten angeordnet ist und eine lösbare Sperre (68) aufweist, um das rückwärtige Ende des entsprechenden äußeren unteren Seitenbereichs zu arretieren.

11. Fahrzeug nach Anspruch 10, wobei jedes zweite Stützmittel (63, 64, 66) vordere und rückwärtige Arme (63, 64) aufweist, welche durch eine Gelenkverbindung (65) schwenkbar miteinander verbunden sind, und der vordere Arm (63) den vorderen Abschnitt des länglichen Bettes vorsieht und der rückwärtige Arm (64) den rückwärtigen Abschnitt des länglichen Bettes vorsieht.

12. Fahrzeug nach Anspruch 11, wobei der vordere Arm (63) auch den Sitz (67) vorsieht und die lösbare Sperre (68) trägt und der rückwärtige Arm (64) nach oben um die Schwenkverbindung (65) bei der ersten Anordnung schwenkbar ist, um eine Schranke gegen eine Rückwärtsbewegung einer beladenen zweiten Art von Nutzlastmodul (9) zu bilden.

13. Fahrzeug nach einem der Ansprüche 10 bis 12, wobei das längliche Bett ein längliches Rollenbett (66) ist.

14. Fahrzeug nach einem vorhergehenden Anspruch, wobei jedes erste Stützmittel eine oder mehrere Rollen (62) aufweist für das Abstützen einer entsprechenden Schiene, die sich längs der Unterseite der ersten Art von Nutzlastmodul (F) erstreckt.

15. Fahrzeug nach einem vorhergehenden Anspruch, wobei das Lasthandhabungssystem (5) von der Art mit Einhänge-Hebevorrichtung ist.

16. Fahrzeug nach einem vorhergehenden Anspruch, wobei die erste Art von Nutzlastmodul eine Plattform mit Seitenwänden (F) ist.

17. Fahrzeug nach einem vorhergehenden Anspruch, wobei die zweite Art von Nutzlastmodul ein ISO-Behälter (9) ist.

## Revendications

1. Véhicule (1) comprenant :
un système de manipulation de charge (5) pour charger des premier et deuxième types de module de charge utile (F, 9) sur le véhicule (1) sur l'arrière du véhicule (1), un premier moyen de support (62) étant disposé sur chaque côté de l'arrière du véhicule (1) pour supporter le dessous du premier type de module de charge utile (F) durant le chargement ; et
des premier et deuxième dispositifs de support (6) montés de manière à pivoter sur des côtés respectifs de l'arrière du véhicule (1) et comportant chacun un deuxième moyen de support (63, 64, 66) pour supporter le dessous du deuxième type de module de charge utile (9) durant le chargement ;
**caractérisé en ce que** :
chaque premier moyen de support (62) est situé sur l'un, respectif, des premier et deuxième dispositifs de support (6) ; et
les dispositifs de support (6) pouvant pivoter entre une première configuration dans laquelle le premier moyen de support (62) est tourné vers le bas et le deuxième moyen de support (63, 64, 66) est tourné vers le haut et une deuxième configuration dans laquelle le premier moyen de support (62) est tourné vers le haut et le deuxième moyen de support (63, 64, 66) est tourné vers le bas.

2. Véhicule selon la revendication 1, dans lequel, dans la première configuration, les dispositifs de support (6) s'étendent vers l'extérieur loin l'un de l'autre et, dans la deuxième configuration, les dispositifs de support (6) s'étendent vers l'intérieur l'un vers l'autre.

3. Véhicule selon la revendication 1 ou 2, dans lequel les dispositifs de support (6) se déplacent dans des plans généralement verticaux lorsqu'ils pivotent entre les première et deuxième configurations.

4. Véhicule selon l'une quelconque des revendications précédentes, dans lequel chaque dispositif de support (6) comporte un pivot principal (8) au moyen duquel il est monté de manière à pivoter pour un mouvement entre les première et deuxième configurations, et a son premier moyen de support (62) plus proche du pivot principal (8) que le deuxième moyen de support (63, 64, 66).

5. Véhicule selon l'une quelconque des revendications précédentes, dans lequel, dans la première configuration, les surfaces de support de module de charge utile du deuxième moyen de support (63, 64, 66) sont situées au-dessus des bases inversées du premier moyen de support (62) et, dans la deuxième configuration, les surfaces de support de module de charge utile du premier moyen de support (62) sont situées au-dessus des bases inversées du deuxième moyen de support (63, 64, 66).

6. Véhicule selon l'une quelconque des revendications précédentes, dans lequel chaque dispositif de support (6) comprend une saillie (611) qui, dans la deuxième configuration, dépasse au-dessus du premier moyen de support (62) sur son côté extérieur et s'incline vers le bas en direction du premier moyen de support pour guider le premier type de module de charge utile (F) en alignement de chargement avec le premier moyen de support.

7. Véhicule selon la revendication 6, dans lequel la saillie (611), dans la première configuration, dépasse vers le bas et bute contre une butée (7) pour empêcher un mouvement pivotant du dispositif de support (6) au-delà de la première configuration.

8. Véhicule selon l'une quelconque des revendications précédentes, dans lequel, dans la deuxième configuration, les bases (61) du premier moyen de support (62) siègent sur des butées (7, 31) pour empêcher un mouvement pivotant des dispositifs de support (6) au-delà de la deuxième configuration.

9. Véhicule selon l'une quelconque des revendications précédentes, dans lequel chaque dispositif de support (6) comprend un bras principal (61) qui comprend le premier moyen de support (62), et le deuxième moyen de support (63, 64, 66) est relié au bras principal (61) via un pivot secondaire (69).

10. Véhicule selon la revendication 9, dans lequel chaque deuxième moyen de support (63, 64, 66) comprend un lit longitudinal pour supporter en glissement une région latérale inférieure externe respective du deuxième type de module de charge utile (9) et un siège (67) positionné dans le lit longitudinal entre ses sections avant et arrière et comprenant un verrou débrayable (68) pour verrouiller l'extrémité arrière de ladite région latérale inférieure externe respective.

11. Véhicule selon la revendication 10, dans lequel chaque deuxième moyen de support (63, 64, 66) comprend des bras avant et arrière (63, 64) qui sont reliés conjointement de manière à pivoter par une connexion de pivotement (65), et le bras avant (63) constitue la section avant du lit longitudinal et le bras arrière (64) constitue la section arrière du lit longitudinal.

12. Véhicule selon la revendication 11, dans lequel le bras avant (63) fournit aussi le siège (67) et supporte le verrou débrayable (68), et le bras arrière (64) pivote vers le haut autour de la connexion de pivotement (65) dans la première configuration pour former une barrière contre un mouvement vers l'arrière d'un deuxième type de module de charge utile (9) chargé.

13. Véhicule selon l'une quelconque des revendications 10 à 12, dans lequel le lit longitudinal est un transporteur à rouleaux (66) longitudinal.

14. Véhicule selon l'une quelconque des revendications précédentes, dans lequel chaque premier moyen de support comprend un ou plusieurs rouleaux (62) pour supporter un rail respectif s'étendant le long du dessous du premier type de module de charge utile (F).

15. Véhicule selon l'une quelconque des revendications précédentes, dans lequel le système de manipulation de charge (5) est du type à soulèvement par crochet.

16. Véhicule selon l'une quelconque des revendications précédentes, dans lequel le premier type de module de charge utile est un conteneur plate-forme empilable (F).

17. Véhicule selon l'une quelconque des revendications précédentes, dans lequel le deuxième type de module de charge utile est un conteneur ISO (9).
